# EUROPEAN PATENT SPECIFICATION

(11) **EP 2 418 917 B1**
(45) Date of publication and mention of the grant of the patent: **13.11.2013**
(21) Application number: 10171299.0
(22) Date of filing: 29.07.2010
(51) Int. Cl.: H05B 33/08

(54) **Reverse polarity series type LED and drive circuit**
LED des Typs mit umschaltbarer Polarität und Antriebsschaltung
Diode de type série à polarité inversée et circuit de commande

(43) Date of publication of application: 15.02.2012
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A1- 2 099 260
- EP-A1- 2 194 761
- EP-A2- 2 079 281
- WO-A1-2008/022563
- US-B2- 7 573 729

## Description

### BACKGROUND OF THE INVENTION

### (a) Field of the invention

The present invention relates to a reverse polarity series type LED and drive circuit that feature the use of direct current or alternating current power source by means of the selection of pins.

### (b) Description of the Prior Art

Currently LEDs are divided into direct current electric energy drive and alternating current LED which is driven by alternating current through reverse polarity parallel connection of LEDs. Their usages are relatively inflexible.

EP2079281 discloses a mutually series connected resistive, or inductive, or capacitive impedance to divide a voltage of a bi-directional power source. An impedance component is used to divide power to drive a bi-directional conducting light emitting diode connected in parallel at the two ends of the impedance component.

### SUMMARY OF THE INVENTION

The present invention of a reverse polarity series type LED is formed by two sets of LED and diode assemblies in reverse polarity series connection wherein the first set is consisted of at least one or multiple homopolar series or parallel connected or series and parallel connected LEDs, and the second set consisting of at least one or more homopolar parallel or series connected or series and parallel connected LEDs for further connection to the drive circuit formed by current-limiting impedance and/or power storage and discharging devices and/or voltage-limit circuit devices in order to produce the required operational characteristics.

According to one aspect of the invention, an LED drive circuit comprises: a first LED (101); a second LED (102) connected in series with the first LED (101) and opposite in polarity with the first LED (101) so as to oppose the conduction of the first LED (101); a first diode (201) connected in anti-parallel with the first LED with opposing polarity; and a second diode (202) connected in anti-parallel with the second LED (201) with opposing polarity.

### BRIEF DESCRIPTION OF THE DRAWINGS

FIG. 1 is the circuit diagram of the reverse polarity series type LED of the present invention.
FIG. 2 is the circuit diagram of the present invention as applied on the alternating current power source and connected in series with the impedance elements.
FIG. 3 is the circuit diagram of the reverse polarity series type LED as applied on the direct current power source.
FIG. 4 is the circuit diagram of the reverse polarity series type LED as applied on the alternating current power source wherein the LEDs are first connected in series with the impedance elements, and then connected in parallel with the diodes.
FIG. 5 is the circuit diagram of the reverse polarity series type LED of the present invention as applied on the direct current power source wherein the LEDs are first connected in series with impedance elements, and then connected in parallel with the diodes.
FIG. 6 is the circuit diagram of the reverse polarity series type LED of the present invention as applied on the alternating current power source wherein the LEDs are first connected in series with the current-limiting impedance element, and then connected in parallel with both the power storing and discharging device and the diodes.
FIG 7 is the circuit diagram of the reverse polarity series type LED as applied on the alternating current power source wherein the LEDs are first connected in series with the current-limiting elements and then connected in parallel with the power storing and discharging devices, and then connected in series with the blocking diodes, and finally are connected in parallel with the diodes.
FIG. 8 is the operational circuit diagram of FIG. 6 wherein impedance elements are not installed.
FIG 9 is the operational circuit diagram of FIG 7 wherein impedance elements are not installed.
FIG 10 is the operational circuit diagram of FIG. 4 wherein the voltage-limiting elements are connected in parallel with both terminals of the diodes.
FIG. 11 is the operational circuit diagram of FIG 6 wherein the voltage-limiting elements are connected in parallel with both terminals of the diodes.
FIG. 12 is the operational circuit diagram of FIG 7 wherein the voltage-limiting elements are connected in parallel with both terminals of the diodes.
FIG 13 is the circuit diagram of both terminals of the LEDs connected in parallel with the voltage-limiting elements in FIG 10.
FIG 14 is the circuit diagram of both terminals of the LEDs connected in parallel with the voltage-limiting elements in FIG 11.
FIG 15 is the circuit diagram of both terminals of the LEDs connected in parallel with the voltage-limiting elements in FIG 12.

### DESCRIPTION OF MAIN COMPONENT SYMBOLS

(101)' (102)' LED
(201)' (202)' (203)' (204) : Diodes
(301)' ((302) : Power storing and discharging devices
(400)' (4(4)' (402) : Current-limiting impedance elements
(501)' (502) : Voltage-limiting elements
a terminal : Independent terminal of the first LED and diode assembly connection.
b terminal : Reverse series connection terminal of the first and second LED and diode assemblies.
c terminal : Independent terminal of the second LED and diode assembly connection.

### DETAILED DESCRIPTION OF THE PREFERRED EMBODIMENTS

Currently LEDs are divided into direct current electric energy drive and alternating current LED which is driven by alternating current through reverse polarity parallel connection of LEDs. Their usages are relatively inflexible.

The present invention relates to a reverse polarity series type LED and drive circuit as recited in claim 1.

The main formation of the reverse polarity series type LED and drive circuit are the following:

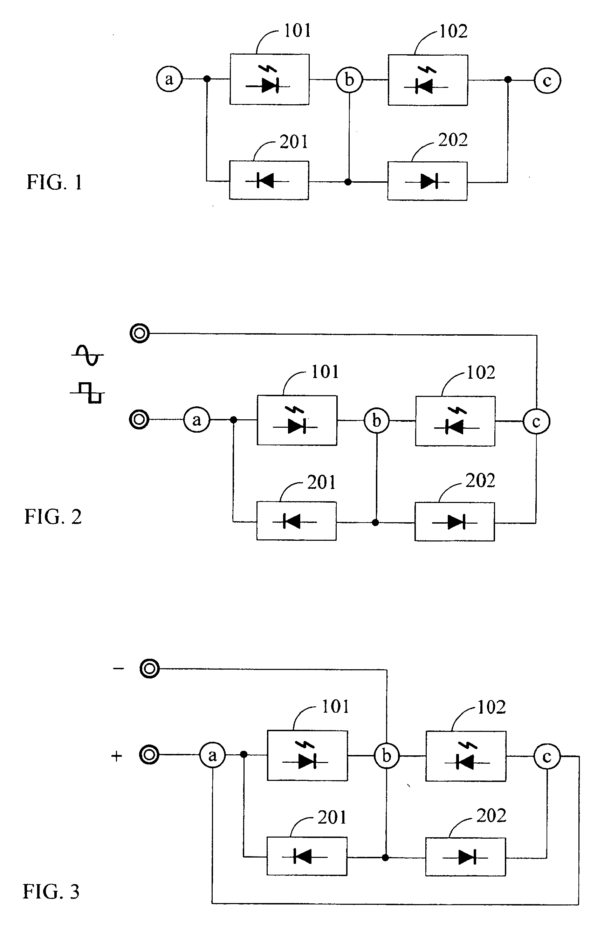

FIG 1 is the circuit structural diagram of the reverse polarity series LED of the present invention;

The main formation of FIG 1 includes:

LED (101): Formed by one or more luminous diodes in homopolar parallel or series connection or in series and parallel connection.

LED (102): Formed by one or more luminous diodes in homopolar parallel or series connection or in series and parallel connection.

Diodes (201), (202): Formed by one or more rectified diode or single way conductive circuit devices in parallel or series connection or in series and parallel connection.

By means of parallel connection between the LED (101) and the diode (201) in the reciprocal turn-on current direction, the first set of LED and diode assembly is formed. And by means of the parallel connection between the LED (102) and the Diode (202) in the reciprocal turn-on current direction, the second LED and diode assembly is formed.

By means of the reverse polarity series connection between the first LED and diode assembly with the second LED and diode assembly, a reverse polarity series type LED device is formed; wherein the independent connection terminal of the first LED and diode assembly is designated as the (a) terminal, and the reverse polarity series connection terminal between the first and the second LED and diode assemblies is designated as the (b) terminal. The independent connection terminal of the second LED and diode assembly is designated as the (c) terminal.

When alternating current power is delivered from the (a) and (c) terminals of the reverse polarity series type LED, the reverse polarity series type LED device serves to perform the functions of the alternating current LED. FIG 2 shows the circuit diagram of the reverse polarity series type LED as applied on alternating current power; or

When the (a) and (c) terminals of the reverse polarity series type LED are connected to each other, their connection terminal and (b) terminal serve to commonly allow direct current to pass through LED (101) and LED (102) so that the reverse polarity series type LED device serves to perform the functions of a direct current LED. FIG. 3 shows the circuit diagram of the reverse polarity series type LED as applied on the direct current power.

When the reverse polarity series type LED and drive circuit are applied on the alternating current power, a current-limiting impedance element (400) is series connected to the (a) or (c) terminals of the alternating current power and the reverse polarity series type LED and/or a current-limiting impedance element (401) is series connected to LED (101) and/or a current-limiting impedance element (402) is series connected to the LED (102).

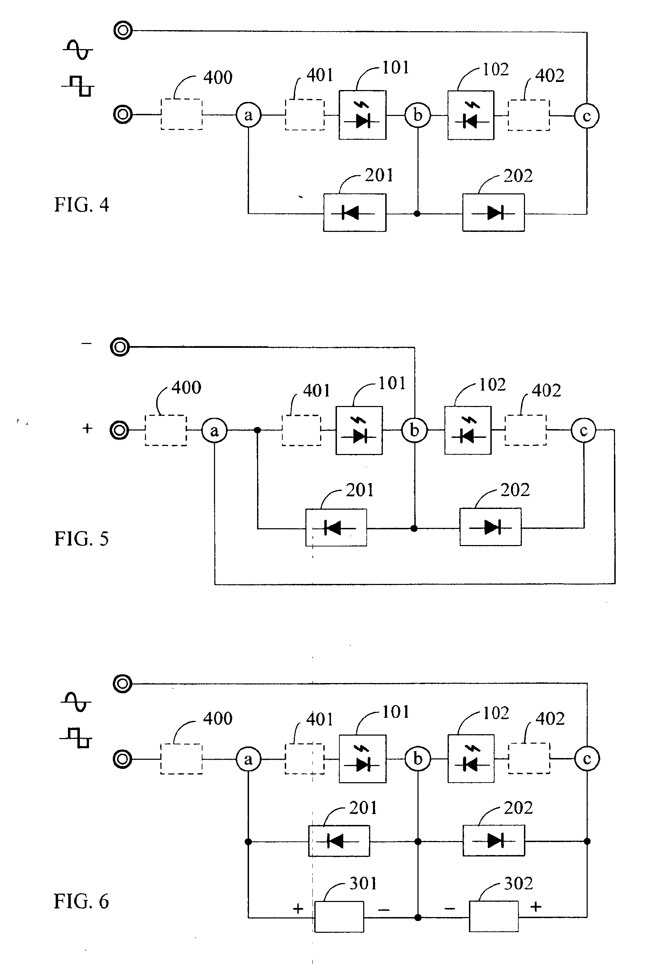

FIG. 4 is the circuit diagram of the reverse polarity series type LED of the present invention being applied on alternating current power wherein the LEDs are connected in series with the impedance elements, and then connected in parallel with the diodes.

As shown in FIG 4, the impedance elements are formed by one or more impedance element types including: 1) resistive impedance element 2) conductive impedance elements 3) inductive impedance elements 4) linear transistor impedance elements 5) clipping on-off type elements formed by solid on-off type elements 6) thyristor clipping on-off elements.

The series positions of the impedance elements include: 1) the impedance element is connected in series with individual LED afterwhich it connects in parallel with diodes; and/or 2) the impedance element is connected in series between the power source and the reverse polarity series type LED; and/or 3) the LED connects to the diode in parallel and then connects to the impedance element in series.

When the reverse polarity series type LED and drive circuit are applied on the direct current power, a current-limiting impedance element (400) is series-connected with the connection terminal of the direct current power and the reverse polarity series type LED (a) and (c) terminals or with (b) terminal and/or a current-limiting impedance element (401) is series-connected to the LED (101) and/or a current-limiting impedance element (402) is series connected to the LED (102).

FIG. 5 is a circuit diagram of the reverse polarity series type LED being applied on the direct current power source wherein the LED's are first connected in series with the impedance elements, and then connected in parallel with the diodes.

As shown in FIG. 5, the impedance elements formed by one or more impedance element types including: 1) resistive impedance element; 2) linear transistor impedance elements; 3) clipping on-off type elements formed by solid on-off type elements; 4) thyristor clipping on-off elements.

The series positions of the impedance elements include: 1) the impedance element is connected in series with individual LED afterwhich it connects in parallel with diodes; and/or 2) the impedance element is connected in series between the power source and the reverse polarity series type LED; and/or 3) the LED connects to the diode in parallel and then connects to the impedance element in series.

When the reverse polarity series type LED and drive circuit are applied on the alternating current power, a current-limiting impedance element (400) is series connected to the (a) or (c) terminals of the alternating current power and the reverse polarity series type LED and/or a current-limiting impedance element (401) is series connected to LED (101) and/or a current-limiting impedance element (402) is series connected to the LED (102), and the both terminals of diode (201) is parallel-connected to the power storing and discharging device (301) and/or the both terminals of diode (202) is parallel-connected to the power storing and discharging device (302). Their polarities during the delivery of alternating current power are such that they assume a power supply status with respect to the LED with which they are connected in parallel. When the power supply voltage is higher than the voltage of its parallel-connected power storing and discharging device, the power source simultaneously supplies power to the LED and charges the power storing and discharging device with which it is connected in parallel. The polarities of the alternating current power supply do not supply power to its parallel-connected LED. When the power supply voltage is lower than the voltage of the power storing and discharging device, the power storing and discharging device will supply power to the LED with which it is connected in parallel.

By means of the operation of the power storing and discharging device, the following partial or complete functions are attained: 1) enables two LEDs to deliver power and emit light without being affected by the polarity changes of the alternating current power source; 2) when alternating current power is driving the LED, optical pulsation of the LED is reduced; 3) supplies delay electric energy for LED when power is cut off; 4) serves as power supply to allow continuous lighting of LEDs during an emergency power shutdown. The power storing and discharging device is consisted of a rechargeable battery or a monopolar or bipolar capacitance or super capacitance; FIG. 6 is the circuit diagram of the reverse polarity series type LED as applied on alternating current power wherein the LEDs are first connected in series with the impedance elements, and then connected in parallel with the power storing and discharging devices, and with the diodes.

When the reverse polarity series type LED and drive circuit are applied on the alternating current power, a current-limiting impedance element (400) is series connected to the (a) or (c) terminals of the alternating current power and the reverse polarity series type LED and/or a current-limiting impedance element (401) is series connected to LED (101), and according to the direction of the light-emitting current of LED (101), it is connected in series with diode (203), then through the current input terminal of diode (203) and the current output terminal of LED (101), it assumes a reverse current flow and connects in parallel with diode (201) and/or a current-limiting impedance element (402) is series-connected to LED (102), and according to the direction of light-emitting current, it is connected in series to diode (204), and then through the current input terminal of diode (204) and the current output terminal of LED (102), it assumes a reverse current flow and connects in parallel with diode (202), a power storing and discharging device (301) is connected in parallel between the joint connecting diode (203) and the current-limiting impedance element (401) and the current output terminal of LED (101), and/or a power storing and discharging device (302) is connected in parallel between the joint connecting diode (204) and current-limiting impedance element (402) and the current output terminal of LED (102). Their polarities during the delivery of alternating current power are such that they assume a power supply status with respect to the LED with which they are connected in parallel. When the power supply voltage is higher than the voltage of its parallel-connected power storing and discharging device, the power source simultaneously supplies power to the LED and charges the power storing and discharging device with which it is connected in parallel. The polarities of the alternating current power supply do not supply power to its parallel-connected LED. When the power supply voltage is lower than the voltage of the power storing and discharging device, the power storing and discharging device will supply power to the LED with which it is connected in parallel.

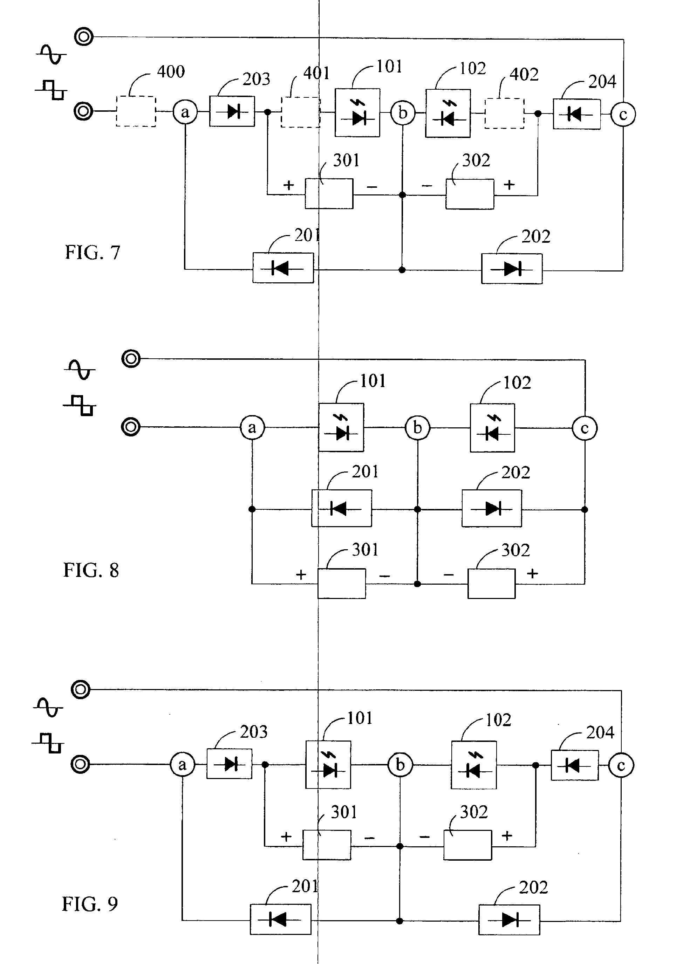

By means of the operation of the power storing and discharging device, the following partial or complete functions are attained: 1) enables two LEDs to deliver power and emit light without being affected by the polarity changes of the alternating current power source; 2) when alternating current power is driving the LED, optical pulsation of the LED is reduced; 3) supplies delay electric energy for LED when power is cut off; 4) serves as power supply to allow continuous lighting of LEDs during an emergency power shutdown. The power storing and discharging device is consisted of a rechargeable battery or a monopolar or bipolar capacitance or super capacitance; FIG 7 is the circuit diagram of the reverse polarity series type LED as applied on alternating current power wherein the LEDs are first connected in series with the current-limiting elements and then connected in parallel with the power storing and discharging devices, and then connected in series with the blocking diodes, and finally are connected in parallel with the diodes.

In the operational diagram of FIG. 6 and FIG. 7 wherein the reverse polarity series type LED is applied on the alternating current power and parallel-connected to a power storing and discharging device, the current-limiting impedance element (400), and/or the current-limiting impedance element (401) and/or the current-limiting impedance element (402) are optionally installed.

FIG. 8 is the operational circuit diagram of FIG. 6 wherein impedance elements are not installed.

FIG. 9 is the operational circuit diagram of FIG. 7 wherein impedance elements are not installed.

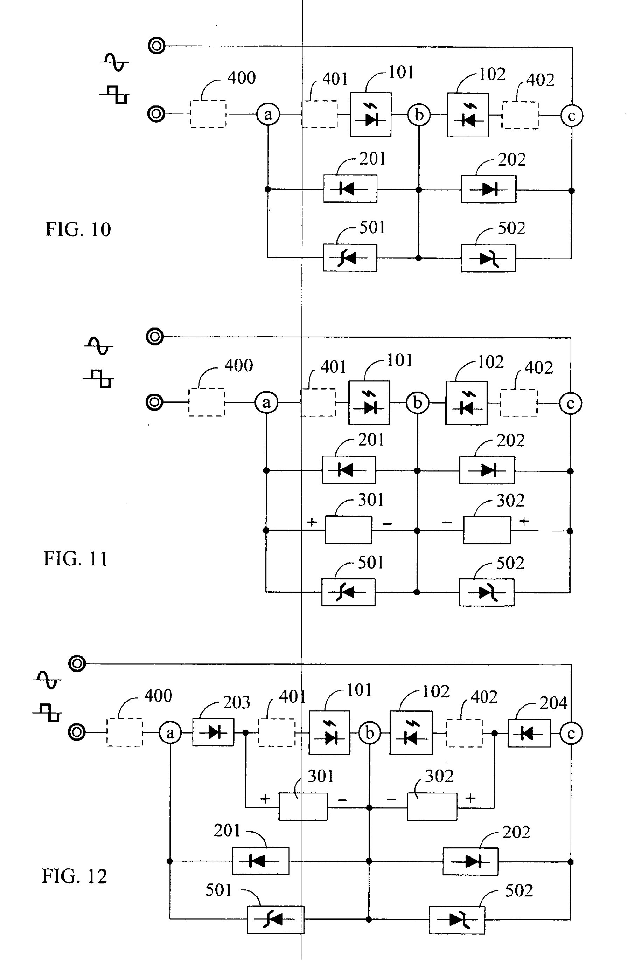

When the reverse polarity series type LED and drive circuit are applied on the alternating current power, a voltage-limiting element (501) and/or voltage-limiting element (502) is/are connected in parallel to both terminals of diode (201) and/or diode (202) to form a voltage-limiting protection for the LED in conjunction with the installation of current-limiting impedance element (400) and/or current-limiting impedance element (401) and/or current-limiting impedance element (402). The voltage-limiting elements are consisted of zener diodes or electromechanical and electronic circuit devices with zener effects. FIG. 10 is the operational circuit diagram of FIG 4 wherein the voltage-limiting elements are connected in parallel with both terminals of the diodes.

The reverse polarity series type LED and drive circuit further connect LED (201) and/or the both terminals of diode (202) in parallel with voltage-limiting element (501) and/or voltage-limiting element (502) to protect the LED and the power storing and discharging devices. Pertinent functions are shown in FIG 4 to FIG. 9.

FIG. 11 is the operational circuit diagram of FIG. 6 wherein the voltage-limiting elements are connected in parallel with both terminals of the diodes.

FIG 11 shows the both terminals of diode (201) of the circuit in FIG. 6 further connected in parallel with the voltage-limiting element (501), and/or the both terminals of diode (202) is connected in parallel with voltage-limiting element (502).

FIG. 12 is the operational circuit diagram of FIG. 7 wherein the voltage-limiting elements are connected in parallel with both terminals of the diodes.

FIG. 12 shows the two terminals of diode (201) of the circuit in FIG. 7 further connected in parallel with the voltage-limiting element (501), and/or both terminals of diode (202) is connected in parallel with voltage-limiting element (502).

The reverse polarity series type LED and drive circuit as applied on the operational circuits shown in FIG. 10, 11 and 12 wherein the voltage-limiting element (501) and/or voltage-limiting element (502) connected in parallel to both terminals of diode (301) and/or diode (302) are installed and connected in parallel with LED (101) and/or LED (102), or installed on both locations.

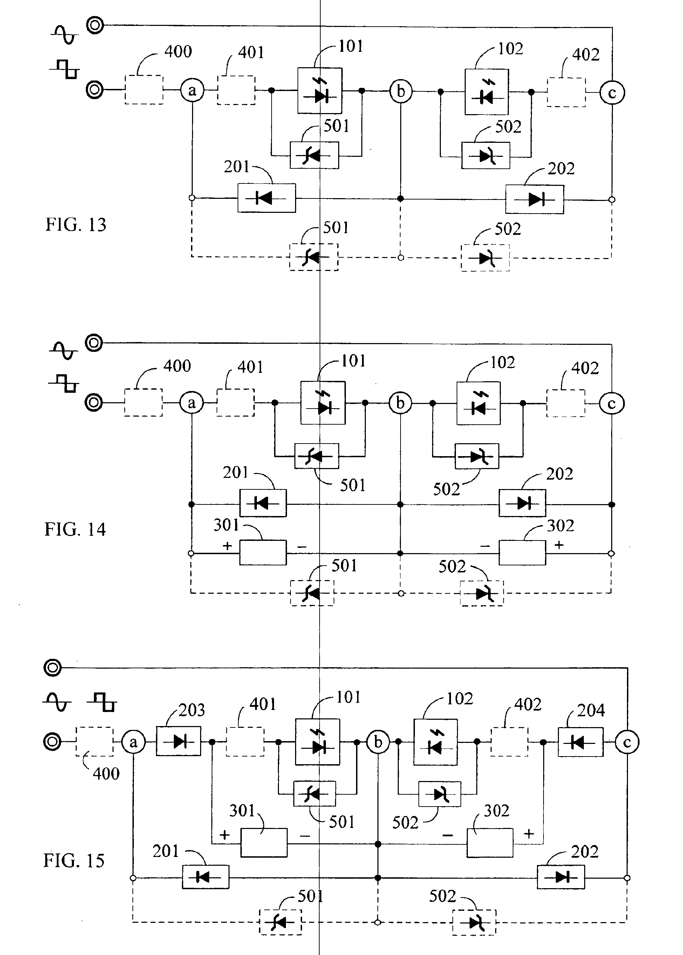

FIG. 13 is the circuit diagram of both terminals of the LEDs connected in parallel with the voltage-limiting elements in FIG. 10.

FIG. 14 is the circuit diagram of both terminals of the LEDs connected in parallel with the voltage-limiting elements in FIG. 11.

FIG. 15 is the circuit diagram of both terminals of the LEDs connected in parallel with the voltage-limiting elements in FIG 12.

During actual applications, pertinent elements of the reverse polarity series type LED and drive circuit have the following options:
1) The specifications for power, voltages, currents and numbers as well as the series or parallel or series-parallel connections of LED (101) and LED (102) are the same with or different from each other;
2) The colors of lights emitted by the energized LED (101) and LED (102) are the same with or different from each other;
3) The types and specifications of the current-limiting element (400) and/or current-limiting element (401) and/or current-limiting element (402) are the same with or different from each other;
4) The current-limiting impedance element (400) and/or the current-limiting impedance element (401) and/or the current-limiting impedance (402) are fixed impedances and adjustable impedance values or clipping controlled or linear controlled in order to control LED light adjustments. This includes simultaneous or separate control of LED (101) and LED (102);
5) The types and specifications of the power storing and discharging device (301) and/or power storing and discharging device (302) are the same with or different from each other;
6) The types and specifications of the voltage-limiting element (501) and voltage-limiting element (502) are the same with or different from each other.

## Claims

1. A reverse polarity series type LED and drive circuit formed by first and second LED and diode assemblies in reverse polarity series connection, wherein
the first LED and diode assembly comprises:
a first LED (101) formed by one or more LEDs in homopolar parallel or series connection or in series and parallel connection,
a first diode (201) formed by one or more rectified diodes or single way conductive circuit devices in parallel or series connection or in series and parallel connection,
wherein the first LED and diode assembly is formed by the parallel connection of the first LED (101) and the first diode (201) in the reciprocal turn-on current direction;
the second LED and diode assembly comprises:
a second LED (102) formed by one or more LEDs in homopolar parallel or series connection or in series and parallel connection,
a second diode (202) formed by one or more rectified diodes or single way conductive circuit devices in parallel or series connection or in series and parallel connection,
wherein the second LED and diode assembly is formed by the parallel connection of the second LED (102) and the second diode (202) in the reciprocal turn-on current direction;
the reverse polarity series type LED and drive circuit further comprises:
a first connection terminal (a) connected to a first side of said first LED and diode assembly,
a second connection terminal (b) being connected to a second side of said first LED and diode assembly and to a second side of said second LED and diode assembly, whereby the second connection terminal (b) is at the series connection of the first and second LED and diode assemblies,
a third connection terminal (c) is connected to a first side of said second LED and diode assembly, and
a first current-limiting impedance element (400) connected in series to the first LED and diode assembly or the second LED and diode assembly via the respective first (a) or third (c) connection terminals and/or a second current-limiting impedance element (401) connected in series to the first LED (101), and/or a third current-limiting impedance element (402) connected in series to the second LED (102),
**characterised in that** the reverse polarity series type LED and drive circuit functions with an alternating current power when said alternating power is connected between said first and third terminals (a, c) and with a direct current when said first and third terminals (a, c) are connected together and their connection and said second terminal (b) serve to commonly allow direct current to pass through said first and second LEDs (101, 102),
whereby the reverse polarity series type LED and drive circuit further comprises a first power storing and discharging device (301) connected in parallel to the first diode (201), and/or a second power storing and discharging device (302) connected in parallel to the second diode (202), wherein the power storing and discharging device is consisted of a rechargeable battery or a monopolar or bipolar capacitance or super capacitance.

2. The reverse polarity series type LED and drive circuit as claimed in claim 1, wherein the first and second current-limiting impedance elements (400, 401) are formed by one or more impedance element types including:
1) resistive impedance element;
2) conductive impedance elements;
3) inductive impedance elements;
4) linear transistor impedance elements;
5) clipping on-off type elements formed by solid on-off type elements;
6) thyristor clipping on-off elements; and
the series positions of the impedance elements includes:
1) the impedance element is connected in series with individual LED after which it connects in parallel with diodes; and/or
2) the impedance element is connected in series between a power source and the reverse polarity series type LED; and/or
3) the LED connects to the diode in parallel and then connects to the impedance element in series.

3. The reverse polarity series type LED and drive circuit as claimed in claim 1 are applied on the direct current power, the first current-limiting impedance element (400) is series-connected with the second connection terminal (b); and
the first, second and third impedance elements (400, 401, 402) are formed by one or more impedance element types including:
1) resistive impedance element;
2) linear transistor impedance elements;
3) clipping on-off type elements formed by solid on-off type elements
4) thyristor clipping on-off elements;
the series positions of the impedance elements include:
1) the impedance element is connected in series with individual LED after which it connects in parallel with diodes; and/or
2) the impedance element is connected in series between a power source and the reverse polarity series type LED; and/or
3) the LED connects to the diode in parallel and then connects to the impedance element in series.

4. The reverse polarity series type LED and drive circuit as claimed in claim 1, wherein
when the alternating current power source voltage is higher than a voltage of either the first or second power storing and discharging devices (301, 302), current is supplied to that power storing and discharging device and to the parallel connected first or second LED (101, 102), and current is not supplied to the other of the first or second parallel-connected LEDs;
when the power source voltage is lower than a voltage of either the first or second power storing and discharging devices (301, 302), the power storing and discharging device will supply power to the first or second LED (101, 102) with which it is connected in parallel to; and
operation of the first and/or second power storing and discharging devices (301, 302) attain at least one of the following functions:
1) deliver powerto the respective first and/or second LEDs (101, 102) to enable them to emit light without being affected by the polarity changes of the alternating current power source;
2) reduce optical pulsation of the respective first and/or second LEDs (101, 102) when driven by alternating current power;
3) supply delay electric energy for the respective first and/or second LEDs (101, 102) when the power source is cut off; and
4) serve as a power supply to allow continuous lighting of the respective first and/or second LEDs (101, 102) during an emergency power shutdown.

5. The reverse polarity series type LED and drive circuit as claimed in claim 1, wherein
the second current-limiting impedance element (401) is connected in series between a third diode (203) and the first LED (101), wherein the third diode (203) and the first LED (101) are in the reciprocal turn-on current direction, and connect in parallel to the first diode (201);
the third current-limiting impedance element (402) is connected in series between a fourth diode (204) and the second LED (102), wherein the fourth diode (204) and the second LED (102) are in the reciprocal turn-on current direction, and connect in parallel to the second diode (202);
the first power storing and discharging device (301) is connected from between the third diode (203) and the second current-limiting impedance element (401) to the second terminal connection (b), and/or
the second power storing and discharging device (302) is connected from between the fourth diode (204) and the third current-limiting impedance element (402) to the second terminal connection;
the first and/or second power storing and discharging devices (301, 302) are arranged to supply power to the first and/or second LED (101, 102) with which they are connected in parallel; wherein
when the alternating current power source voltage is higher than a voltage of either the first or second power storing and discharging devices (301, 302), current is supplied to that power storing and discharging device and to the parallel connected first or second LED (101, 102), and current is not supplied to the other of the first or second parallel-connected LEDs;
when the power source voltage is lower than a voltage of either the first or second power storing and discharging devices (301, 302), the power storing and discharging device will supply power to the first or second LED (101, 102) with which it is connected in parallel;
and
operation of the first and/or second power storing and discharging devices (301, 302) attain the following partial or complete functions:
1) deliver power to the respective first and/or second LEDs (101, 102) to enable them to emit light without being affected by the polarity changes of the alternating current power;
2) reduce optical pulsation of the respective first and/or second LEDs (101, 102) when driven by alternating current power;
3) supply delay electric energy for the respective first and/or second LEDs (101, 102) when the power source is cut off; and
4) serve as a power supply to allow continuous lighting of the respective first and/or second LEDs (101, 102) during an emergency power shutdown.

6. The reverse polarity series type LED and drive circuit as claimed in claim 2, further comprising
a first voltage-limiting element (501) connected in parallel to both terminals of the first diode (201) to form a voltage-limiting protection for the first LED (101), wherein the first voltage-limiting element (501) consists of either a zener diode or an electromechanical and electronic circuit device with zener effects; and/or
a second voltage-limiting element (502) connected in parallel to both terminals of the second diode (202) to form a voltage-limiting protection for the second LED (102), wherein the second voltage-limiting element (502) consists of either a zener diode or an electromechanical and electronic circuit device with zener effects.

7. The reverse polarity series type LED and drive circuit as claimed in claim 1, wherein the specifications for power, voltage, current and emitted colour (when energised) of the first and second LEDs (101, 102) are the same or different with respect to each other.

8. The reverse polarity series type LED and drive circuit as claimed in any preceding claim, wherein
the types and specifications of any of the first, second, and third current-limiting elements (400, 401, 402) are the same or different wither respect to any other; and
any of the first, second, and third current-limiting impedances (400, 401, 402) have fixed or adjustable impedance values, or are clipping or linear controlled in order to control LED light adjustments enabling simultaneous or separate control of the first and second LEDs (101, 102).

9. The reverse polarity series type LED and drive circuit as claimed in claim 1 wherein the type and specification of the first and second power storing and discharging devices (301, 302) are the same or different with respect to each other.

## Patentansprüche

1. Treiberschaltung mit Umkehr-LED vom seriellen Typ, die durch erste und zweite LED- und Diodenbaugruppen in Reihenschaltung mit umgekehrter Polarität gebildet wird, wobei
die erste LED- und Diodenbaugruppe Folgendes umfasst:
- eine erste LED (101), die durch eine oder mehrere LED in homopolarer Parallel- oder Reihenschaltung oder in Reihen- und Parallelschaltung gebildet wird,
- eine erste Diode (201), die durch eine oder mehrere gleichgerichtete Dioden oder in einer Richtung leitfähige Schaltungsvorrichtungen in Parallel- oder Reihenschaltung oder in Reihen- und Parallelschaltung gebildet wird;
- wobei die erste LED- und Diodenbaugruppe durch die Parallelschaltung der ersten LED (101) und der ersten Diode (201) in der wechselseitigen Einschalt-Stromrichtung gebildet wird;
die zweite LED- und Diodenbaugruppe Folgendes umfasst:
- eine zweite LED (102), die durch eine oder mehrere LED in homopolarer Parallel- oder Reihenschaltung oder in Reihen- und Parallelschaltung gebildet wird,
- eine zweite Diode (202), die durch eine oder mehrere gleichgerichtete Dioden oder in einer Richtung leitfähige Schaltungsvorrichtungen in Parallel- oder Reihenschaltung oder in Reihen- und Parallelschaltung gebildet wird;
- wobei die zweite LED- und Diodenbaugruppe durch die Parallelschaltung der zweiten LED (102) und der zweiten Diode (202) in der wechselseitigen Einschalt-Stromrichtung gebildet wird;
die Treiberschaltung mit Umkehr-LED vom seriellen Typ ferner Folgendes umfasst:
- eine erste Anschlussklemme (a), die an eine erste Seite der ersten LED- und Diodenbaugruppe angeschlossen ist,
- eine zweite Anschlussklemme (b), die an eine zweite Seite der ersten LED- und Diodenbaugruppe und an eine zweite Seite der zweiten LED- und Diodenbaugruppe angeschlossen ist, wodurch sich die zweite Anschlussklemme (b) an der Reihenschaltung der ersten und zweiten LED- und Diodenbaugruppen befindet,
- eine dritte Anschlussklemme (c), die an einer ersten Seite der zweiten LED- und Diodenbaugruppe angeschlossen ist, und
- ein erstes strombegrenzendes Impedanzelement (400), das mit der ersten LED- und Diodenbaugruppe oder der zweiten LED- und Diodenbaugruppe über die jeweilige erste (a) oder dritte (c) Anschlussklemme in Reihe geschaltet ist, und/oder ein zweites strombegrenzendes Impedanzelement (401), das mit der ersten LED (101) in Reihe geschaltet ist, und/oder ein drittes strombegrenzendes Impedanzelement (402), das mit der zweiten LED (102) in Reihe geschaltet ist,
**dadurch gekennzeichnet, dass** die Treiberschaltung mit Umkehr-LED vom seriellen Typ mit Wechselstrom-Energie funktioniert, wenn der Wechselenergie zwischen den ersten und dritten Klemmen (a, c) angeschlossen ist, und mit Gleichstrom funktioniert, wenn die ersten und dritten Klemmen (a, c) aneinander angeschlossen sind und ihr Anschluss und die zweite Klemme (b) dazu dienen, den Gleichstrom gemeinsam durch die ersten und zweiten LED (101, 102) fließen zu lassen,
wobei die Treiberschaltung mit Umkehr-LED vom seriellen Typ ferner eine erste Energie speichernde und entladende Vorrichtung (301) umfasst, die mit der ersten Diode (201) parallel geschaltet ist, und/oder eine zweite Energie speichernde und entladende Vorrichtung (302) umfasst, die mit der zweiten Diode (202) parallel geschaltet ist, wobei die Energie speichernde und entladende Vorrichtung aus einer aufladbaren Batterie oder einer monopolaren oder bipolaren Kapazität oder Superkapazität besteht.

2. Treiberschaltung mit Umkehr-LED vom seriellen Typ nach Anspruch 1, wobei die ersten und zweiten strombegrenzenden Impedanzelemente (400, 401) durch einen oder mehrere Impedanzelementtypen gebildet werden, umfassend:
1) resistive Impedanzelemente;
2) leitfähige Impedanzelemente;
3) induktive Impedanzelemente;
4) lineare transistorgesteuerte Impedanzelemente;
5) höchstwertbegrenzende Ein/Aus-Elemente, die durch massive Ein/Aus-Elemente gebildet werden;
6) thyristorgesteuerte höchstwertbegrenzende Ein/Aus-Elemente; und
die Reihenpositionen der Impedanzelemente Folgendes umfassen:
1) das Impedanzelement ist mit der einzelnen LED in Reihe geschaltet und anschließend mit den Dioden parallel geschaltet; und/oder
2) das Impedanzelement ist zwischen einer Energiequelle und der Umkehr-LED vom seriellen Typ in Reihe geschaltet; und/oder
3) die LED ist mit der Diode parallel geschaltet und dann mit dem Impedanzelement in Reihe geschaltet.

3. Treiberschaltung mit Umkehr-LED vom seriellen Typ nach Anspruch 1, angewendet auf Gleichstrom-Energie, wobei das erste strombegrenzende Impedanzelement (400) mit der zweiten Anschlussklemme (b) in Reihe geschaltet ist; und
die ersten, zweiten und dritten Impedanzelemente (400, 401, 402) werden durch einen oder mehrere Impedanzelementtypen gebildet, umfassend:
1) resistive Impedanzelemente;
2) lineare transistorgesteuerte Impedanzelemente;
3) höchstwertbegrenzende Ein/Aus-Elemente, die durch massive Ein/Aus-Elemente gebildet werden;
4) thyristorgesteuerte höchstwertbegrenzende Ein/Aus-Elemente;
die Reihenpositionen der Impedanzelemente umfassen Folgendes:
1) das Impedanzelement ist mit der einzelnen LED in Reihe geschaltet und anschließend mit den Dioden parallel geschaltet; und/oder
2) das Impedanzelement ist zwischen einer Energiequelle und der Umkehr-LED vom seriellen Typ in Reihe geschaltet; und/oder
3) die LED ist mit der Diode parallel geschaltet und dann mit dem Impedanzelement in Reihe geschaltet.

4. Treiberschaltung mit Umkehr-LED vom seriellen Typ nach Anspruch 1, wobei
wenn die Spannung der Wechselstrom-Energiequelle höher als eine Spannung entweder der ersten oder der zweiten Strom speichernden und abgebenden Vorrichtungen (301, 302) ist, Strom zu dieser Strom speichernden und abgebenden Vorrichtung und zu der parallel geschalteten ersten oder zweiten LED (101, 102) zugeführt wird, und kein Strom zu der anderen von der ersten oder zweiten parallel geschalteten LED zugeführt wird;
wenn die Spannung der Energiequelle niedriger als eine Spannung entweder von der ersten oder von der zweiten Strom speichernden und abgebenden Vorrichtung (301, 302) ist, die Energie speichernde und entladende Vorrichtung Strom zu der ersten oder zweiten LED (101, 102) zuführt, mit der sie parallel geschaltet ist; und
der Betrieb der ersten und/oder zweiten Strom speichernden und abgebenden Vorrichtung (301, 302) mindestens eine der folgenden Funktionen bewirkt:
1) Abgeben von Energie an die jeweilige erste und/oder zweite LED (101, 102), um es ihr bzw. ihnen zu ermöglichen, Licht zu emittieren, ohne von Polaritätsänderungen der Wechselstrom-Energiequelle beeinflusst zu werden;
2) Reduzieren des optischen Pulsierens der jeweiligen ersten und/oder zweiten LED (101, 102), wenn sie durch Wechselstromenergie angesteuert wird bzw. werden;
3) Zuführen von elektrischer Verzögerungsenergie für die jeweilige erste und/oder zweite LED (101, 102), wenn die Energiequelle ausgeschaltet ist; und
4) Funktionieren als Energieversorgung, um eine durchgehende Beleuchtung der jeweiligen ersten und/oder zweiten LED (101, 102) während einer Notenergieausschaltung zu ermöglichen.

5. Treiberschaltung mit Umkehr-LED vom seriellen Typ nach Anspruch 1, wobei
das zweite strombegrenzende Impedanzelement (401) zwischen einer dritten Diode (203) und der ersten LED (101) in Reihe geschaltet ist, wobei sich die dritte Diode (203) und die erste LED (101) in der wechselseitigen Einschalt-Stromrichtung befinden und mit der ersten Diode (201) parallel geschaltet sind;
das dritte strombegrenzende Impedanzelement (402) zwischen einer vierten Diode (204) und der zweiten LED (102) in Reihe geschaltet ist, wobei sich die vierte Diode (204) und die zweite LED (102) in der wechselseitigen Einschalt-Stromrichtung befinden und mit der zweiten Diode (202) parallel geschaltet sind;
die erste Energie speichernde und entladende Vorrichtung (301) zwischen der dritten Diode (203) und dem zweiten strombegrenzenden Impedanzelement (401) ausgehend an den zweiten Klemmenanschluss (b) angeschlossen ist, und/oder
die zweite Energie speichernde und entladende Vorrichtung (302) zwischen der vierten Diode (204) und dem dritten strombegrenzenden Impedanzelement (402) ausgehend an den zweiten Klemmenanschluss angeschlossen ist,
die erste und/oder zweite Energie speichernde und entladende Vorrichtung (301, 302) angeordnet ist bzw. sind, um die erste und/oder zweite LED (101, 102) mit Energie zu versorgen, mit der bzw. denen sie parallel geschaltet ist bzw. sind; wobei
wenn die Spannung der Wechselstrom-Energiequelle höher als eine Spannung entweder der ersten oder der zweiten Strom speichernden und abgebenden Vorrichtungen (301, 302) ist, Strom zu dieser Strom speichernden und abgebenden Vorrichtung und zu der parallel geschalteten ersten oder zweiten LED (101, 102) zugeführt wird, und kein Strom zu der anderen von der ersten oder zweiten parallel geschalteten LED zugeführt wird;
wenn die Spannung der Stromquelle niedriger als eine Spannung entweder von der ersten oder von der zweiten Strom speichernden und abgebenden Vorrichtung (301, 302) ist, die Energie speichernde und entladende Vorrichtung Strom zu der ersten oder zweiten LED (101, 102) zuführt, mit der sie parallel geschaltet ist; und
der Betrieb der ersten und/oder zweiten Strom speichernden und abgebenden Vorrichtung (301, 302) die folgenden Teil- oder Vollfunktionen erreicht:
1) Abgeben von Energie an die jeweilige erste und/oder zweite LED (101, 102), um es ihr bzw. ihnen zu ermöglichen, Licht zu emittieren, ohne von Polaritätsänderungen der Wechselstrom-Energie beeinflusst zu werden;
2) Reduzieren des optischen Pulsierens der jeweiligen ersten und/oder zweiten LED (101, 102), wenn sie durch Wechselstrom-Energie angesteuert wird bzw. werden;
3) Zuführen von elektrischer Verzögerungsenergie für die jeweilige erste und/oder zweite LED (101, 102), wenn die Energiequelle ausgeschaltet ist; und
4) Funktionieren als Energieversorgung, um eine durchgehende Beleuchtung der jeweiligen ersten und/oder zweiten LED (101, 102) während einer Notenergieausschaltung zu ermöglichen.

6. Treiberschaltung mit Umkehr-LED vom seriellen Typ nach Anspruch 2, ferner umfassend
ein erstes spannungsbegrenzendes Element (501), das zu den beiden Klemmen der ersten Diode (201) parallel geschaltet ist, um eine spannungsbegrenzende Schutzvorrichtung für die erste LED (101) zu bilden, wobei das erste spannungsbegrenzende Element (501) entweder aus einer Zener-Diode oder aus einer elektromechanischen und elektronischen Schaltungsvorrichtung mit Zener-Effekten besteht; und/oder
ein zweites spannungsbegrenzendes Element (502), das zu den beiden Klemmen der zweiten Diode (202) parallel geschaltet ist, um eine spannungsbegrenzende Schutzvorrichtung für die zweite LED (102) zu bilden, wobei das zweite spannungsbegrenzende Element (502) entweder aus einer Zener-Diode oder aus einer elektromechanischen und elektronischen Schaltungsvorrichtung mit Zener-Effekten besteht.

7. Treiberschaltung mit Umkehr-LED vom seriellen Typ nach Anspruch 1, wobei
die Spezifikationen für Energie, Spannung, Strom und emittierte Farbe (bei Energieversorgung) der ersten und zweiten LED (101, 102) untereinander identisch oder unterschiedlich sind.

8. Treiberschaltung mit Umkehr-LED vom seriellen Typ nach einem der vorhergehenden Ansprüche, wobei
die Typen und Spezifikationen eines der ersten, zweiten und dritten strombegrenzenden Elemente (400, 401, 402) untereinander identisch oder unterschiedlich sind; und
eine der ersten, zweiten und dritten strombegrenzenden Impedanzen (400, 401, 402) feste oder einstellbare Impedanzwerte aufweist oder in der höchstwertbegrenzend oder linear gesteuert ist, um LED-Lichteinstellungen zu steuern, die eine gleichzeitige oder getrennte Steuerung der ersten und zweiten LED (101, 102) ermöglichen.

9. Treiberschaltung mit Umkehr-LED vom seriellen Typ nach Anspruch 1, wobei der Typ und die Spezifikation der ersten und zweiten Energie speichernden und entladenden Vorrichtungen (301, 302) untereinander identisch oder unterschiedlich sind.

## Revendications

1. Circuit de commande et à DEL de type série à polarité inversée formé par des premier et second ensembles DEL et diode en connexion en série à polarité inversée, dans lequel :
le premier ensemble DEL et diode comprend :
une première DEL (101) formée par une ou plusieurs DEL en connexion homopolaire en parallèle ou en série ou en connexion en série et en parallèle,
une première diode (201) formée par une ou plusieurs diodes redressées ou des dispositifs à circuit conducteur à une voie en connexion en parallèle ou en série ou en connexion en série et en parallèle,
le premier ensemble DEL et diode étant formé par la connexion en parallèle de la première DEL (101) et de la première diode (201) dans la direction de courant de mise sous tension réciproque ;
le second ensemble DEL et diode comprend :
une seconde DEL (102) formée par une ou plusieurs DEL en connexion homopolaire en parallèle ou en série ou en connexion en série et en parallèle,
une deuxième diode (202) formée par une ou plusieurs diodes redressées ou des dispositifs à circuit conducteur à une voie en connexion en parallèle ou en série ou en connexion en série et en parallèle,
le second ensemble DEL et diode étant formé par le montage en parallèle de la seconde DEL (102) et de la deuxième diode (202) dans la direction de courant de mise sous tension réciproque ;
le circuit de commande et à DEL de type série à polarité inversée comprend en outre :
une première borne de connexion (a) connectée à un premier côté dudit premier ensemble DEL et diode,
une deuxième borne de connexion (b) connectée à un second côté dudit premier ensemble DEL et diode et à un second côté dudit second ensemble DEL et diode, ce par quoi la seconde borne de connexion (b) est à la connexion en série des premier et second ensembles DEL et diode,
une troisième borne de connexion (c) connectée à un premier côté dudit second ensemble DEL et diode, et
un premier élément d'impédance de limitation de courant (400) connecté en série au premier ensemble DEL et diode ou au second ensemble DEL et diode par l'intermédiaire de la première (a) ou de la troisième (c) borne de connexion respective et/ou un deuxième élément d'impédance de limitation de courant (401) connecté en série à la première DEL (101), et/ou un troisième élément d'impédance de limitation de courant (402) connecté en série à la seconde DEL (102),
**caractérisé par le fait que** le circuit de commande et à DEL de type série à polarité inversée fonctionne avec un courant alternatif lorsque ledit courant alternatif est connecté entre les première et troisième bornes (a, c) et avec un courant continu lorsque lesdites première et troisième bornes (a, c) sont connectées ensemble et leur connexion et ladite deuxième borne (b) servent à autoriser manière commune un courant continu à passer par les première et seconde DEL (101, 102),
ce par quoi le circuit de commande et à DEL de type série à polarité inversée comprend en outre un premier dispositif de stockage et de décharge d'énergie (301) connecté en parallèle à la première diode (201), et/ou un second dispositif de stockage et de décharge d'énergie (302) connecté en parallèle à la deuxième diode (202), le dispositif de stockage et de décharge d'énergie consistant en une batterie rechargeable ou un condensateur ou supercondensateur monopolaire ou bipolaire.

2. Circuit de commande et à DEL de type série à polarité inversée selon la revendication 1, dans lequel les premier et deuxième éléments d'impédance de limitation de courant (400, 401) sont formés par un ou plusieurs types d'éléments d'impédance comprenant :
1) un élément d'impédance résistif ;
2) des éléments d'impédance conducteurs ;
3) des éléments d'impédance inducteurs ;
4) des éléments d'impédance à transistor linéaire ;
5) des éléments de découpage de type marche-arrêt formés par des éléments solides de type marche-arrêt ;
6) des éléments de découpage marche-arrêt à thyristor ; et
les positions en série des éléments d'impédance comprennent :
1) l'élément d'impédance est connecté en série avec une DEL individuelle, après quoi il se connecte en parallèle avec des diodes ; et/ou
2) l'élément d'impédance est connecté en série entre une source d'alimentation et la DEL de type série à polarité inversée ; et/ou
3) la DEL se connecte à la diode en parallèle puis se connecte à l'élément d'impédance en série.

3. Circuit de commande et à DEL de type série à polarité inversée selon la revendication 1, qui est appliqué au courant continu, le premier élément d'impédance de limitation de courant (400) étant connecté en série avec la deuxième borne de connexion (b) ; et
les premier, deuxième et troisième éléments d'impédance (400, 401, 402) sont formés par un ou plusieurs types d'élément d'impédance comprenant :
1) un élément d'impédance résistif ;
2) des éléments d'impédance à transistor linéaire ;
3) des éléments de découpage de type marche-arrêt formés par des éléments solides de type marche-arrêt ;
4) des éléments de découpage marche-arrêt à thyristor ;
les positions en série des éléments d'impédance comprennent :
1) l'élément d'impédance est connecté en série avec une DEL individuelle, après quoi il se connecte en parallèle avec des diodes ; et/ou
2) l'élément d'impédance est connecté en série entre une source d'alimentation et la DEL de type série à polarité inversée ; et/ou
3) la DEL se connecte à la diode en parallèle puis se connecte à l'élément d'impédance en série.

4. Circuit de commande et à DEL de type série à polarité inversée selon la revendication 1, dans lequel :
lorsque la tension de source d'alimentation en courant alternatif est supérieure à une tension soit du premier soit du second dispositif de stockage et de décharge d'énergie (301, 302), du courant est distribué à ce dispositif de stockage et de décharge d'énergie et à la première ou seconde DEL connectées en parallèle (101, 102), et du courant n'est pas distribué à l'autre de la première ou seconde DEL connectées en parallèle ;
lorsque la tension de source d'alimentation est inférieure à une tension soit du premier soit du second dispositif de stockage et de décharge d'énergie (301, 302), le dispositif de stockage et de décharge d'énergie distribuera de l'énergie à la première ou seconde DEL (101, 102) avec laquelle il est connecté en parallèle ; et
le fonctionnement du premier et/ou du second dispositif de stockage et de décharge d'énergie (301, 302) remplit au moins l'une des fonctions suivantes :
1) délivrer de l'énergie à la première et/ou à la seconde DEL respective (101, 102) pour leur permettre d'émettre de la lumière sans être affectées par les changements de polarité de la source d'alimentation en courant alternatif ;
2) réduire la pulsation optique de la première et/ou de la seconde DEL respective (101, 102) lorsqu'elles sont commandées par du courant alternatif ;
3) distribuer de l'énergie électrique en retard pour la première et/ou la seconde DEL respective (101, 102) lorsque la source d'alimentation est coupée ; et
4) servir d'alimentation électrique pour permettre un éclairage continu de la première et/ou de la seconde DEL respective (101, 102) durant une coupure d'alimentation d'urgence.

5. Circuit de commande et à DEL de type série à polarité inversée selon la revendication 1, dans lequel :
le deuxième élément d'impédance de limitation de courant (401) est connecté en série entre une troisième diode (203) et la première DEL (101), la troisième diode (203) et la première DEL (101) étant dans la direction de courant de mise sous tension réciproque et se connectant en parallèle à la première diode (201) ;
le troisième élément d'impédance de limitation de courant (402) est connecté en série entre une quatrième diode (204) et la seconde DEL (102), la quatrième diode (204) et la seconde DEL (102) étant dans la direction de courant de mise sous tension réciproque et se connectant en parallèle à la deuxième diode (202) ;
le premier dispositif de stockage et de décharge d'énergie (301) est connecté à partir d'entre la troisième diode (203) et le deuxième élément d'impédance de limitation de courant (401), à la deuxième borne de connexion (b), et/ou
le second dispositif de stockage et de décharge d'énergie (302) est connecté à partir d'entre la quatrième diode (204) et le troisième élément d'impédance de limitation de courant (402), à la deuxième borne de connexion ;
le premier et/ou le second dispositif de stockage et de décharge d'énergie (301, 302) sont agencés pour distribuer du courant à la première et/ou à la seconde DEL (101, 102) avec laquelle ils sont connectés en parallèle ;
lorsque la tension de source d'alimentation en courant alternatif est supérieure à une tension soit du premier soit du second dispositif de charge et de décharge d'énergie (301, 302), du courant est distribué à ce dispositif de décharge et de stockage d'énergie et à la première ou seconde DEL connectées en parallèle (101, 102), et du courant n'est pas distribué à l'autre de la première ou seconde DEL connectées en parallèle ;
lorsque la tension de source d'alimentation est inférieure à une tension soit du premier soit du second dispositif de charge et de décharge d'énergie (301, 302), le dispositif de stockage de charge et de décharge d'énergie distribuera du courant à la première ou seconde DEL (101, 102) avec laquelle il est connecté en parallèle ; et
le fonctionnement du premier et/ou du second dispositif de stockage et de décharge d'énergie (301, 302) remplit les fonctions partielles ou complètes suivantes :
1) délivrer du courant à la première et/ou à la seconde DEL respective (101, 102) pour leur permettre d'émettre de la lumière sans être affectées par les changements de polarité du courant alternatif ;
2) réduire la pulsation optique de la première et/ou de la seconde DEL respective (101, 102) lorsqu'elles sont commandées par du courant alternatif ;
3) distribuer de l'énergie électrique en retard pour la première et/ou la seconde DEL respective (101, 102) lorsque la source d'alimentation est coupée ; et
4) servir d'alimentation électrique pour permettre un éclairage continu de la première et/ou de la seconde DEL respective (101, 102) durant une coupure d'alimentation d'urgence.

6. Circuit de commande et à DEL de type série à polarité inversée selon la revendication 2, comprenant en outre :
un premier élément de limitation de tension (501) connecté en parallèle aux deux bornes de la première diode (201) pour former une protection de limitation de tension pour la première DEL (101), le premier élément de limitation de tension (501) consistant soit en une diode zener, soit en un dispositif de circuit électromécanique et électronique à effets zener ; et/ou
un deuxième élément de limitation de tension (502) connecté en parallèle aux deux bornes de la deuxième diode (202) pour former une protection de limitation de tension pour la deuxième DEL (102), le deuxième élément de limitation de tension (502) consistant soit en une diode zener, soit en un dispositif de circuit électromécanique et électronique à effets zener.

7. Circuit de commande et à DEL de type série à polarité inversée selon la revendication 1, dans lequel les spécifications pour la puissance, la tension, le courant et la couleur émise (lorsqu'alimentées) des première et seconde DEL (101, 102) sont identiques ou différentes les unes des autres.

8. Circuit de commande et à DEL de type série à polarité inversée selon l'une quelconque des revendications précédentes, dans lequel :
les types et spécifications de l'un quelconque des premier, deuxième et troisième éléments de limitation de courant (400, 401, 402) sont identiques ou différents les uns des autres ; et
l'une quelconque des première, deuxième et troisième impédances de limitation de courant (400, 401, 402) a des valeurs d'impédance fixes ou réglables, ou est commandée par découpage ou de manière linéaire afin de commander les réglages de lumière de DEL permettant une commande simultanée ou séparée des première et seconde DEL (101, 102).

9. Circuit de commande et à DEL de type série à polarité inversée selon la revendication 1, dans lequel le type et la spécification des premier et second dispositifs de stockage et de décharge d'énergie (301, 302) sont identiques ou différents l'une de l'autre.
